# EUROPÄISCHE PATENTSCHRIFT

(11) **EP 1 200 518 B1**
(45) Veröffentlichungstag und Bekanntmachung des Hinweises auf die Patenterteilung: **22.11.2006**
(21) Anmeldenummer: 00945819.1
(22) Anmeldetag: 26.06.2000
(51) Int. Cl.: C08K 5/42, C08L 75/04

(54) **POLYURETHANHARNSTOFFFASERN MIT ERHÖHTER FESTIGKEIT**
POLYURETHANE-UREA FIBRES WITH IMPROVED RESISTANCE
FIBRES DE POLYURETHANNE-UREE A RESISTANCE AMELIOREE

(30) Priorität: 07.07.1999 DE 19931255
(43) Veröffentlichungstag der Anmeldung: 02.05.2002
(73) Patentinhaber: Bayer Aktiengesellschaft, 51368 Leverkusen (DE); Dorlastan Fibers & Monofil GmbH, 41538 Dormagen (DE)
(72) Erfinder: ZWEERING, Uwe, D-40589 Düsseldorf (DE); GROSS, Thomas, D-42579 Heiligenhaus (DE); HÜTTE, Stephan, D-51065 Köln (DE); ENDESFELDER, Andreas, D-51491 Overath (DE)
(74) Vertreter: Kerkhoff, Thomas
(86) Internationale Anmeldenummer: PCT/EP2000/005887
(87) Internationale Veröffentlichungsnummer: WO 2001/004202

(56) Entgegenhaltungen:
- EP-A- 0 934 978
- US-A- 3 997 450
- TOSE Y ET AL: "Oily fluid containing sulfosuccinic acid or its salt for elastomer fiber" STN CAPLUS, XP002103421
- DATABASE CHEMABS [Online] CHEMICAL ABSTRACTS SERVICE, COLUMBUS, OHIO, US; WAKAHARA, HIROYUKI ET AL: "Manufacture of smooth microporous grain synthetic leather with good mechanical strength" retrieved from STN Database accession no. 113:116799 CA XP002151082 & DATABASE REGISTRY [Online] RN 577-11-7, & JP 02 139483 A (KANEBO, LTD., JAPAN) 29. Mai 1990 (1990-05-29)

## Beschreibung

Die Erfindung betrifft Polyurethanharnstoffzusammensetzungen und speziell daraus resultierende elastische Polyurethanharnstofffasern, die ein Dialkylsulfosuccinat als Additiv enthalten, das die Festigkeit der Faser deutlich erhöht.

Der im Rahmen der vorliegenden Erfindungsbeschreibung verwendete Ausdruck Faser umfasst Stapelfasern und kontinuierliche Filamente, die durch im Prinzip bekannte Spinnverfahren wie das Trockenspinnverfahren, das Nassspinnverfahren oder das Schmelzspinnverfahren hergestellt werden können.

Diese Spinnverfahren sind beispielsweise beschrieben in Polyurethan-Elastomerfasem, H. Gall und M. Kausch in Kunststoff-Handbuch 7, Polyurethane, Herausgeber: G. Oertel, Carl Hanser Verlag München Wien, 1993, Seite 679 bis 694.

Elastische Polyurethanharnstofffasern aus langkettigen synthetischen Polymeren, die zu wenigstens 85 % aus segmentierten Polyurethanen auf Basis von z.B. Polyethern, Polyestern und/oder Polycarbonaten aufgebaut sind, sind gut bekannt. Garne aus solchen Fasern werden zur Herstellung von Flächenwaren bzw. Geweben oder Stoffen verwendet, die ihrerseits unter anderem für Miederwaren, Strümpfe und Sportbekleidung wie z.B. Badeanzüge bzw. Badehosen geeignet sind.

Polyurethanharnstofffasern zeigen eine hervorragende Elastizität und starke Dehnbarkeit in Kombination mit hohen Rückstellkräften. Aufgrund dieser hervorragenden Eigenschaftskombination finden sie breite Verwendung im Bekleidungsbereich. Um eine höhere Produktivität bei der Verarbeitung der Polyurethanharnstofffasern zu erreichen, erfolgt die Verarbeitung mit hoher Geschwindigkeit und unter starkem Verzug. Um die Verarbeitungssicherheit zu erhöhen und die Produktivität weiter zu steigern, ist eine hohe Zugfestigkeit der Polyurethanharnstofffasern erforderlich.

In der Literatur werden verschiedene Methoden beschrieben, die Festigkeit von Polyurethanharnstofffasern zu erhöhen.

So kann die Festigkeit der Polyurethanharnstofffasern zum Beispiel verbessert werden, indem bei der Herstellung der Polyurethanharnstofflösung zur Kettenverlängerung des Präpolymeren nicht das in der Regel verwendete Ethylendiamin als alleiniger Kettenverlängerer eingesetzt wird, sondern ein zweites Diamin als Coverlängerer eingesetzt wird (siehe z.B. US-5 616 676, EP-692 039 B2). Die so erhaltenen Polyurethanharnstofffasern zeigen zwar eine verbesserte Festigkeit, verfügen aber wegen der durch den Coverlängerer verursachten Störung der Hartsegmente über eine schlechtere thermische Beständigkeit, was für die Verarbeitung der Fasern nachteilig ist.

Des weiteren wird durch den Einsatz von Coverlängerern die Höchstzugkraftdehnung merklich erniedrigt. Hierdurch kann bei Verarbeitung solcher Fasern z.B. mit Hartfasern, Baumwolle und anderen -fasern eine erhöhte Fadenbruchrate resultieren.

Die japanischen Patent-Veröffentlichungen (Kokoku) JP 44-22113 und JP 45-109956 beschreiben eine Verbesserung der Polyurethanhamstoff-Spinnlösungen, indem vor der Kettenverlängerung das Präpolymere mit einer geringen Menge an monofunktionellem Alkohol (JP 44-22113) oder Amin (JP 45-109956) umgesetzt wird. Der Einfluss dieser Maßnahmen auf die Festigkeit der Fasern ist jedoch nur sehr gering.

In der europäischen Patentanmeldung EP 0 843 032 A1 werden Polyurethanharnstofffasern beschrieben, die aus Spinnlösungen erhalten wurden, denen Salze bestimmter Alkylsulfonate oder Alkylsulfate mit langkettigen Alkylresten zugesetzt wurden. In der Patentanmeldung wird jedoch nicht auf einen möglicherweise negativen Einfluss des Zusatzes dieses Reagenzes auf die thermische Beständigkeit der Polyurethanharnstofffasern eingegangen. Nachteilig ist ferner, dass der Zusatz solcher Salze zu inhomogenen Spinnlösungen führen kann, da die Salze in Polyurethanspinnlösungen schwer löslich sein können. Dies erfordert einen hohen Aufwand bei der Einarbeitung solcher Additive in die Spinnlösung.

In der deutschen Offenlegungsschrift DE 44 34 300 A1 werden Elastanfasern mit verbesserter Thermofixierbarkeit beschrieben, die als Additiv Alkalimetallsalze von Carbonsäuren enthalten. Aus den beschriebenen Beispielen geht jedoch hervor, dass der Effekt auf die Festigkeit der Elastanfasern nur gering ist.

In der unveröffentlichten deutschen Patentanmeldung mit dem Aktenzeichen 19805130.1 werden Elastanfasern beschrieben, bei denen Dialkylsulfosuccinate bzw. deren Salze mit einer Präparation aufgebracht werden, um die elektrostatische Aufladung der Materialien bei der Verarbeitung zu unterdrücken. Zwar wird die Möglichkeit des Einspinnens erwähnt, Beispiele für Fasern mit fein dispergierten oder gelösten Dialkylsulfosuccinaten bzw. deren Salzen finden sich jedoch nicht. Über die Verbesserung der (feinheitsbezogenen) Festigkeit der Elastanfasern durch Einspinnen von Dialkylsulfosuccinaten bzw. deren Salzen wird in dieser Anmeldung nichts ausgesagt.

Aufgabe der vorliegenden Erfindung ist es nun, Polyurethanharnstofffasern zur Verfügung zu stellen, die die genannten Nachteile bekannter Polyurethanharnstofffasern nicht aufweisen und über eine verbesserte (feinheitsbezogene) Festigkeit bei gleichzeitig guter Höchstzugkraftdehnung und guter thermischer Beständigkeit verfügen.

Es wurde gefunden, dass die Festigkeit von Polyurethanharnstofffasern deutlich verbessert werden kann, indem der Polyurethanharnstoffzusammensetzung vor dem Verspinnen das Salz eines Dialkylsulfosuccinates zugesetzt wird. Die thermische Stabilität der Elastanfasern wird durch diesen Zusatz überraschenderweise nicht negativ beeinflusst. Weiterhin wurde gefunden, dass die Einarbeitung des Zusatzes in die Polyurethanharnstoffzusammensetzung ohne großen Aufwand möglich ist, da die Löslichkeit der eingesetzten Salze von Dialkylsulfosuccinaten hervorragend ist und homogene Lösungen erhalten werden.

Gegenstand der Erfindung ist eine Polyurethanharnstoffzusammensetzung mit verbesserten mechanischen Eigenschaften, dadurch gekennzeichnet, dass sie aus
A) von 99,98 bis 65 Gew.-% Polyurethanharnstoffpolymer,
B) von 0,02 bis 15 Gew.-% Dialkylsulfosuccinat entsprechend der allgemeinen Formel (1) 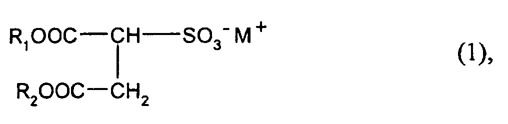 worin
   - R₁ und R₂: gleich sind und für 2-Ethylhexyl-Reste:
   -CH₂-CH(CH₂-CH₃)-CH₂-CH₂-CH₂-CH₃ stehen, und
   - M⁺: Li⁺, Na⁺, K⁺ oder NH₄⁺, bevorzugt Na⁺ ist,
   und
C) von 0 bis 20 Gew.-% Zusatzstoffe besteht.

Durch die Erhöhung der Festigkeit der aus der Polyurethanharnstoffzusammensetzung bestehenden Elastanfäden wird die Verarbeitungssicherheit erhöht und höhere Verarbeitungsgeschwindigkeiten werden möglich.

Die erfindungsgemäßen Polyurethanharnstoff-Zusammensetzungen bestehen aus segmentierten Polyurethanharnstoffpolymeren. Die Polymere weisen Segmentstruktur auf, d.h. sie bestehen aus "kristallinen" und "amorphen" Blöcken (sogenannte Hartsegmente bzw. Weichsegmente).

Die Polyurethanharnstoffzusammensetzung und die Polyurethanharnstofffasern können insbesondere aus einem linearen Homo- oder Copolymer mit je einer Hydroxygruppe am Ende des Moleküls und einem Molekulargewicht von 600 bis 4000 g/mol, wie Polyetherdiole, Polyesterdiole, Polyesteramiddiole, Polycarbonatdiole oder aus einer Mischung bzw. aus Copolymeren dieser Gruppe hergestellt werden. Weiterhin basieren sie auf organischen Diisocyanaten, mit denen die polymeren Diole zu endständig isocyanatfunktionellen Präpolymeren umgesetzt werden, und Diaminen oder Mischungen verschiedener Diamine als Kettenverlängerer, mit denen die endständig isocyanatfunktionellen Präpolymere zu Hochpolymeren umgesetzt werden.

Beispiele für organische Diisocyanate sind 4,4'-Dicyclohexylmethandiisocyanat, Isophorondiisocyanat und 4,4'-Diphenylmethandiisocyanat. Beispiele für Diamine sind Ethylendiamin, 1,2-Propandiamin, 2-Methyl-1,5-diaminopentan, Isophorondiamin, 1,3-Diaminocyclohexan, 1-Methyl-2,4-diaminocyclohexan oder 1,2-Diaminocyclohexan.

Die Polyurethanharnstofffasern können nach grundsätzlich bekannten Verfahren hergestellt werden, wie beispielsweise nach denjenigen, die in den Schriften US 2 929 804, US 3 097 192, US 3 428 711, US 3 553 290 und US 3 555 115 und in der Schrift WO 9 309 174 beschrieben sind.

Die erfindungsgemäßen Polyurethanharnstofffasern können zur Herstellung von elastischen Geweben, Gestricken, Gewirken u.a. textilen Waren verwendet werden.

Weiterer Gegenstand der Erfindung sind auch Polyurethanharnstofffasern mit erhöhter Festigkeit auf Basis von Polyurethanharnstoffpolymeren enthaltend wenigstens von 0,02 bis 15 Gew.-% Dialkylsulfosuccinat entsprechend der allgemeinen Formel (1) 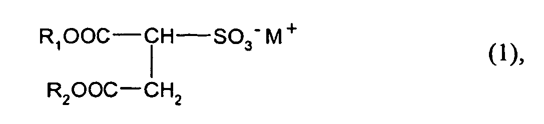 in der
R₁ und R₂ gleich sind und für 2-Ethylhexyl-Reste: -CH₂-CH(CH₂-CH₃)-CH₂-CH₂-CH₂-CH₃ stehen, und
- M⁺: Li⁺, Na⁺, K⁺ oder NH₄⁺, bevorzugt Na⁺ ist,
wobei das Dialkylsulfosuccinat in der Faser fein dispergiert oder gelöst ist.

Weiterer Gegenstand der Erfindung ist die Verwendung von Dialkylsulfosuccinaten entsprechend der allgemeinen Formel (1) 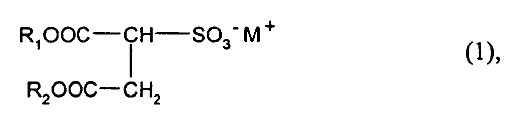 in der
- R₁ und R₂: unabhängig voneinander gleich oder verschieden für eine Alkylgruppe mit 1 bis 30 Kohlenstoffatomen stehen und
- M⁺: Li⁺, Na⁺, K⁺ oder NH₄⁺ ist,
zur Erhöhung der (feinheitsbezogenen) Festigkeit von Polyurethanharnstofffasern aus von Polyurethanharnstoffpolymeren, wobei das Dialkylsulfosuccinat in einer Menge von 0,02 bis 15 Gew.-% in der Faser fein dispergiert oder gelöst ist.

Die Herstellung der Dialkylsulfosuccinate kann wie in der Literaturschrift C. R. Carly, Ind. Eng. Chem., Vol. 31, Seite 45, 1939 beschrieben erfolgen.

Vorteile hinsichtlich der Faserfestigkeit ergeben sich, wenn als Dialkylsulfosuccinat B) eines mit der Formel (2): 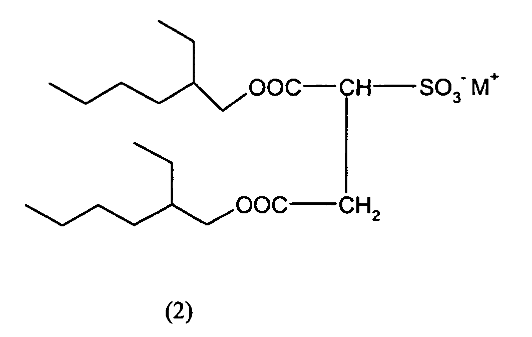 eingesetzt wird, in der M⁺ für Li⁺, Na⁺, K⁺ oder NH₄⁺, bevorzugt für Na⁺ steht.

Besonders bevorzugtes Dialkylsulfosuccinat ist das Natriumsalz des Sulfobernsteinsäure-bis-(2-ethylhexylesters) nach Formel (2).

Die zur Verbesserung der Festigkeit eingesetzten Dialkylsulfosuccinate können als Einzelstoffe oder als Mischungen mehrerer Dialkylsulfosuccinate eingesetzt werden.

Die Dialkylsulfosuccinate können der Polyurethanharnstoffzusammensetzung z.B. bei der Herstellung von Polyurethanharstofffasern an beliebiger Stelle der Verarbeitung der Zusammensetzung zugesetzt werden. Beispielsweise können die Dialkylsulfosuccinate in Form einer Lösung zu einer Lösung, Dispersion oder Aufschlämmung von anderen Additiven hinzugefügt werden. Sie können bei einer Verarbeitung zu Fasern dann in Bezug auf die Faserspinndüsen stromaufwärts mit der Polymerlösung vermischt oder in diese eingespritzt werden. Natürlich können die Dialkylsulfosuccinate auch getrennt zu der Polymer(spinn)lösung als Lösung in einem geeigneten Medium hinzugefügt werden. Die Dialkylsulfosuccinate können weiterhin in den obengenannten Formulierungen bei der gewöhnlichen Polyurethanharnstoffherstellung zugesetzt werden.

Die erfindungsgemäßen Polyurethanharnstoffzusammensetzungen oder daraus herstellbaren Polyurethanharnstofffasern können als Zusatzstoffe C) für verschiedene Zwecke Stoffe wie Mattierungsmittel, Füllstoffe, Antioxidantien, Farbstoffe, Pigmente, Anfärbemittel, Stabilisatoren gegen Wärme, Licht, UV-Strahlung, chlorhaltiges Wasser und gegen Dämpfe, enthalten.

Beispiele für Antioxidantien, Stabilisatoren gegen Wärme, Licht oder UV-Strahlung sind Stabilisatoren aus der Gruppe der sterisch gehinderten Phenole, HALS-Stabilisatoren (hindered amine light stabilizer), Triazine, Benzophenone und der Benzotriazole. Beispiele für Pigmente und Mattierungsmittel sind Titandioxid, Zinkoxid und Bariumsulfat. Beispiele für Farbstoffe sind saure Farbstoffe, Dispersions- und Pigmentfarbstoffe und optische Aufheller. Beispiele für Stabilisatoren gegen Abbau der Fasern durch Chlor oder chlorhaltiges Wasser sind Zinkoxid, Magnesiumoxid oder beschichtete oder unbeschichtete Magnesium-Aluminium-Hydroxycarbonate.

Gegenstand der Erfindung ist ferner ein Verfahren zur Herstellung von verbesserten Polyurethanharnstofffasern nach dem Trockenspinn- oder Nassspinnverfahren, bevorzugt nach dem Trockenspinnverfahren, durch Herstellen der Spinnlösung, Verspinnen der Spinnlösung mit einer Spinndüse, Fadenbildung unterhalb der Spinndüse durch Entfernen des Spinnlösungsmittels durch Trocknen oder in einem Fällbad, Präparieren und Aufwickeln der Fäden, dadurch gekennzeichnet, dass der Polyurethanharnstofflösung vor dem Verspinnen der Lösung zur Polyurethanhamstofffaser von 0,02 bis 15 Gew.-% Dialkylsulfosuccinat entsprechend der allgemeinen Formel (1) 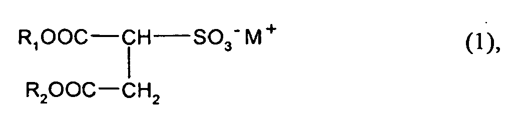 zugemischt und gelöst wird,
worin
R₁ und R₂ gleich sind und für 2-Ethylhexyl-Reste: -CH₂-CH(CH₂-CH₃)-CH₂-CH₂-CH₂-CH₃ stehen, und
- M⁺: Li⁺, Na⁺, K⁺ oder NH₄⁺ , bevorzugt Na⁺ ist.

Die Erfindung wird nachfolgend durch die Beispiele, welche jedoch keine Beschränkung der Erfindung darstellen, weiter erläutert.

### Beispiele:

Die für die nachfolgenden Beispiele und die Vergleichsbeispiele eingesetzte Polyurethanharnstofflösung wurde nach folgender Verfahrensweise hergestellt:

Eine Polyurethanspinnlösung wird aus einem Polyetherdiol, bestehend aus Polytetrahydrofuran (PTHF, z.B. Terathane 2000 von der Fa. DuPont) mit einem durchschnittlichen Molekulargewicht von 2000 g/mol hergestellt. Das Molgewicht ist auf das Zahlenmittel bezogen. Das Diol wird mit Methylen-bis(4-phenyldiisocyanat) (MDI, Bayer AG) mit einem molaren Verhältnis von 1 zu 1,65 gekappt und anschließend mit einem Gemisch aus Ethylendiamin (EDA) und Diethylamin (DEA) im Gewichtsverhältnis 97:3 in Dimethylacetamid kettenverlängert. (Das Verhältnis der Menge von Kettenverlängerer und Kettenabbrecher zu nicht reagiertem Isocyanat im Präpolymeren beträgt in allen Beispielen 1,075.)
Der Feststoffgehalt der resultierenden Polyurethanharnstofflösung liegt bei 30 %.

Danach wird den Polymeren ein Stammansatz von Additiven beigemischt. Dieser Stammansatz besteht aus 62,6 Gew.-% Dimethylacetamid (DMAC), 10,3 Gew.-% Cyanox 1790 (1,3,5-Tris(4-tert.-butyl-3-hydroxy-2,5-dimethylbenzyl)-1,3,5-triazin-2,4,6-(1H,3H,5H)-trion, Fa. Cytec), 27,0 Gew.-% 30%iger Spinnlösung und 0,001 Gew.-% des Farbstoffs Makrolexviolett (Fa. Bayer AG). Dieser Stammansatz wird der Polyurethanzusammensetzung so zugefügt, dass der Gehalt an Cyanox 1790 1,0 Gew.-%, bezogen auf den gesamten Feststoffgehalt, beträgt.

Dieser Polyurethanzusammensetzung wird nun ein zweiter Stammansatz zugemischt. Dieser besteht aus 5,5 Gew.-% Silwet L 7607 (Polyalkoxy-modifiziertes Polydimethylsiloxan; Viskosität: 50 mPas (bei 25°C), Molekulargewicht 1000 g/mol, Fa. OSI Specialties), 5,5 Gew.-% Magnesium-Stearat, 45,0 Gew.-% DMAC und 44,0 Gew.-% einer 30%igen Spinnlösung und wird so zugesetzt, dass ein Magnesium-Stearat-Gehalt von 0,25 Gew.-%, bezogen auf den Feststoff der PolyurethanHamstoff-Polymere, resultiert.

Zu dieser Polyurethanzusammensetzung wird die im folgenden angegebene Menge des Dialkylsulfosuccinates (30 gew.-%ig als homogene Lösung in Dimethylacetamid) bzw. eines anderen Additives gegeben:

### Beispiel 1

0,3 Gew.-% (bezogen auf den Feststoffgehalt der Polyurethanharnstofflösung) an Natrium-bis-(2-ethylhexyl)sulfosuccinat.

### Beispiel 2

0,5 Gew.-% (bezogen auf den Feststoffgehalt der Polyurethanharnstofflösung) an Natrium-bis-(2-ethylhexyl)sulfosuccinat.

### Vergleichsbeispiel 1 (V1)

0,5 Gew.-% (bezogen auf den Feststoffgehalt der Polyurethanharnstofflösung) an Natriumacetat.

### Vergleichsbeispiel 2 (V2)

Kein Zusatz von Additiv.

Die fertige Spinnlösung wird durch Spinndüsen in einer für einen Trockenspinnprozess typischen Spinnapparatur zu Filamenten mit einem Titer von 11 dtex trocken versponnen, wobei jeweils vier Einzelfilamente zu koaleszierenden Filamentgarnen zusammengefasst werden. Die Faserpräparation (Silicone Y 7769, Hersteller: Fa. OSI Specialties) wird über eine Präparationswalze aufgetragen, wobei 4 Gew.-% bezogen auf das Gewicht der Polyurethanhamstofffaser appliziert werden. Die Abzugsgeschwindigkeit der Fadenwickler beträgt 420 m/min.

Die so erhaltenen Filamente wurden gemäß ihrer mechanischen und thermischen Eigenschaften untersucht und charakterisiert. Hierzu wurden vor allem die Feinheitsfestigkeit (FF) und Höchstzugkraftdehnung (HZKD) in Anlehnung an die DIN 53834 Teil 1 vermessen. Zu diesem Zweck wurden Zugversuche an den Elastan-Filamentgarnen im klimatisierten Zustand durchgeführt. Der vorbereitete Prüfling wird dazu in einer Schlinge um den Haken des Messkopfes und um eine 10 mm Umschlingungsklemme mit einer Vorspannkraft von 0,001 cN/dtex gelegt. Die Einspannlänge beträgt insgesamt 200mm. Ein aus Alufolie bestehendes Fähnchen wird genau auf Höhe einer Lichtschranke eingehängt. Der Schlitten fährt mit einer Verformungsgeschwindigkeit von 400 %/min (800mm Abzug) bis zum Bruch des Fadens und nach der Messung wieder in seine Ausgangsstellung zurück. Pro Prüfling werden 20 Messungen durchgeführt. Des weiteren wurde durch Verwendung eines Thermomechanical-Analyzer (TMA) die Heat-Distortion-Temperature (HDT) ermittelt. Hierbei bestimmt man das Längungsverhalten eines unter einer geringen Vorlast (0,2 mg/dtex) stehenden Elastomerfadens (100 mm) bei kontinuierlicher Steigerung der Temperatur (20°C/min). Oberhalb einer bestimmten Temperatur (HDT) findet eine Längung des Fadens ohne weiteren Temperaturanstieg statt. Zur Ermittlung der HDT werden an die entsprechenden Kurven 45° Tangenten angelegt. Je höher die resultierende HDT ist, umso stärker sind die korrespondierenden Wechselwirkungen der Hartsegmente. Die Tabelle 1 zeigt die ermittelten Filamenteigenschaften.

**Tabelle 1:**

| Tabellarischer Vergleich der Fadendaten: | | | | |
|---|---|---|---|---|
| **Beispielnummer** | **Titer dtex** | **FF cN/dtex** | **HZKD %** | **HDT °C** |
| 1 | 44,3 | 1,80 | 573 | 185 |
| 2 | 43,3 | 1,79 | 577 | 189 |
| V1 | 42,5 | 1,50 | 561 | 176 |
| V2 | 46,6 | 1,35 | 588 | 188 |

| | | | | |
|---|---|---|---|---|
| FF: Feinheitsfestigkeit; HZKD: Höchstzugkraftdehnung; HDT: Heat-Distortion-Temperature | | | | |

Wie die Beispiele zeigen, wird die feinheitsbezogene Festigkeit (FF) durch den Zusatz des Dialkylsulfosuccinates deutlich verbessert. Die Höchstzugkraftdehnung (HZKD) und die thermische Stabilität (HDT) bleiben auf hohem Niveau.

Durch Zusatz von Natriumacetat (V1) wird die Feinheitsfestigkeit deutlich weniger stark erhöht als durch Zusatz der Dialkylsulfosuccinate. Außerdem verschlechtert sich die thermische Stabilität (HDT) der Elastane, die mit bekannten Additiven versehen sind.

### Beispiel 3

Die oben beschriebene Polyurethanzusammensetzung wird in Bezug auf den Feststoffgehalt der Polyurethanharnstofflösung mit 0,5 Gew.-% Natrium-bis-(2-ethylhexyl)sulfosuccinat (Aerosol OTS 100%, Fa. Cytec) versetzt. Die Einarbeitung von Natrium-bis-(2-ethylhexyl)sulfosuccinat in die Polyurethanharnstofflösung erfolgt, indem Natrium-bis-(2-ethylhexyl)sulfosuccinat als homogene 30 %ige Lösung in Dimethylacetamid (DMAc) in die Polyurethanharnstofflösung eingerührt wird.

Die so erhaltene Spinnlösung wird durch Spinndüsen in einer für einen Trockenspinnprozess typischen Spinnapparatur zu Filamenten mit einem Titer von 22 dtex nach dem Trockenspinnprozess versponnen, wobei jeweils zwei Einzelfilamente zu koaleszierenden Filamentgarnen zusammengefasst werden. Die Faserpräparation auf Basis von Silikonöl wird in einer Menge von 4 Gew.-% bezogen auf das Gewicht der Faser mit einer Präparationswalze aufgetragen. Die Aufwickelgeschwindigkeit der Faser beträgt 930 m/min.

Im Vergleichsbeispiel 3 (V3) wird die oben beschriebene Spinnlösung ohne Zusatz von Natrium-bis-(2-ethylhexyl)sulfosuccinat unter ansonsten gleichen Bedingungen versponnen.

Die mechanischen Daten der erhaltenen Filamente sind in Tabelle 3 zusammengefasst.

**Tabelle 2**

| Vergleich der Fadendaten bei einer Aufwickelgeschwindigkeit von 930 m/min: | | | |
|---|---|---|---|
| **Beispiel** | **Titer (dtex)** | **FF (cN/dtex)** | **HZKD (%)** |
| 3 | 44 | 1,67 | 548 |
| V3 | 44 | 1,37 | 546 |

| | | | |
|---|---|---|---|
| FF: feinheitsbezogene Feinheitsfestigkeit; HZKD: Höchstzugkraftdehnung. | | | |

Wie der Vergleich der Beispiele zeigt, wird auch bei einer hohen Aufwickelgeschwindigkeit von 930 m/min die feinheitsbezogene Festigkeit (FF) durch den Zusatz von Natrium-bis-(2-ethylhexyl)sulfosuccinat deutlich verbessert. Die Höchstzugkraftdehnung (HZKD) wird durch den Zusatz von Natrium-bis-(2-ethylhexyl)-sulfosuccinat nicht beeinträchtigt und verbleibt gleichbleibend auf hohem Niveau.

## Patentansprüche

1. Polyurethanharnstoffzusammensetzung mit verbesserten mechanischen Eigenschaften, **dadurch gekennzeichnet, dass** sie aus
A) von 99,98 bis 65 Gew.-% Polyurethanharnstoffpolymer,
B) von 0,02 bis 15 Gew.-% Dialkylsulfosuccinat entsprechend der allgemeinen Formel (1) 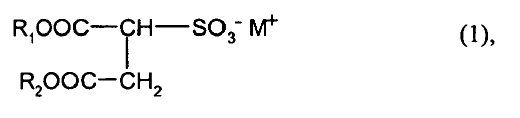 wobei
R₁ und R₂ gleich sind und für 2-Ethylhexyl-Reste:
-CH₂-CH(CH₂-CH₃)-CH₂-CH₂-CH₂-CH₃ stehen, und
M⁺ Li⁺, Na⁺, K⁺ oder NH₄⁺ , bevorzugt Na⁺ ist,
und
C) von 0 bis 20 Gew.-% Zusatzstoffe besteht.

2. Polyurethanharnstoffzusammensetzung nach Anspruch 1, **dadurch gekennzeichnet, dass** als Dialkylsulfosuccinat B) eines der Formel (2): 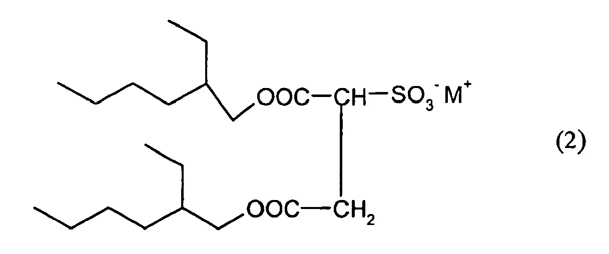 eingesetzt wird, in der M⁺ für Na⁺ steht.

3. Polyurethanharnstofffasern mit erhöhter feinheitsbezogener Festigkeit aus Polyurethanharnstoffpolymeren, enthaltend wenigstens von 0,02 bis 15 Gew.-% Dialkylsulfosuccinat entsprechend der allgemeinen Formel (1) 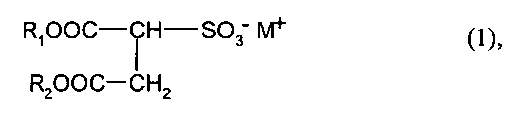 worin
R₁ und R₂ gleich sind und für 2-Ethylhexyl-Reste:
-CH₂-CH(CH₂-CH₃)-CH₂-CH₂-CH₂-CH₃ stehen, und
M⁺ Li⁺, Na⁺, K⁺ oder NH₄⁺, bevorzugt Na⁺ ist,
wobei das Dialkylsulfosuccinat in der Faser fein dispergiert oder gelöst ist.

4. Polyurethanharnstofffasern nach Anspruch 3, **dadurch gekennzeichnet, dass** als Dialkylsulfosuccinat B) eines der Formel (2): 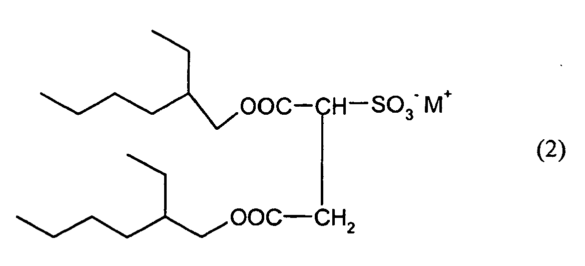 eingesetzt wird, in der M⁺ für Na⁺ steht.

5. Verwendung von Dialkylsulfosuccinaten entsprechend der allgemeinen Formel (1) 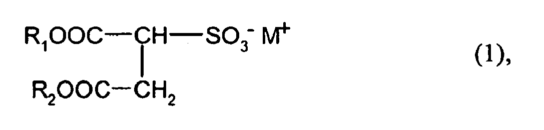 in der
R₁ und R₂ unabhängig voneinander gleich oder verschieden für eine Alkylgruppe mit 1 bis 30 Kohlenstoffatomen stehen und
M⁺ Li⁺, Na⁺, K⁺ oder NH₄⁺ ist,
zur Erhöhung der (feinheitsbezogenen) Festigkeit von Polyurethanharnstofffasern aus Polyurethanharnstoffpolymeren, wobei das Dialkylsulfosuccinat in einer Menge von 0,02 bis 15 Gew.-% in der Faser fein dispergiert oder gelöst ist.

6. Verwendung nach Anspruch 5, **dadurch gekennzeichnet, dass** als Dialkylsulfosuccinat B) eines der Formel (2): 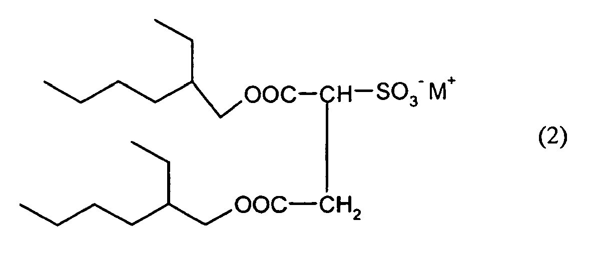 eingesetzt wird, in der M⁺ für Li⁺, Na⁺, K⁺ oder NH₄⁺ steht.

7. Verwendung nach Anspruch 6, wobei das Dialkylsulfosuccinat das Natriumsalz des Sulfobernsteinsäure-bis-(2-ethylhexylesters) nach Formel (2) ist.

8. Verfahren zur Herstellung von verbesserten Polyurethanharnstofffasern nach dem Trockenspinn- oder Nassspinnverfahren, durch Herstellen der Spinnlösung, Verspinnen der Spinnlösung mit einer Spinndüse, Fadenbildung unterhalb der Spinndüse durch Entfernen des Spinnlösungsmittels durch Trocknen oder in einem Fällbad, Präparieren und Aufwickeln der Fäden, **dadurch gekennzeichnet, dass** der Polyurethanharnstofflösung vor dem Verspinnen der Lösung zur Polyurethanhamstofffaser
von 0,02 bis 15 Gew.-% Dialkylsulfosuccinat entsprechend der allgemeinen Formel (1) 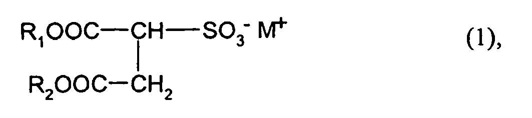 zugemischt und gelöst wird,
worin
R₁ und R₂ gleich sind und für 2-Ethylhexyl-Reste: -CH₂-CH(CH₂-CH₃)-CH₂-CH₂-CH₂-CH₃ stehen, und
M⁺ Li⁺, Na⁺, K⁺ oder NH₄⁺ ist.

9. Verfahren zur Herstellung von Polyurethanharnstofffasern nach Anspruch 8, **dadurch gekennzeichnet, dass** als Dialkylsulfosuccinat B) eines der Formel (2): 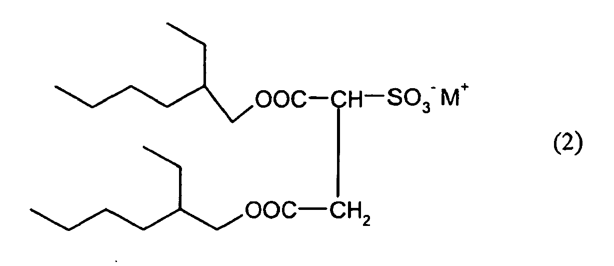 eingesetzt wird, in der M⁺ für Na⁺ steht.

10. Verfahren nach einem der Ansprüche 8 bis 9, **dadurch gekennzeichnet, dass** das Verfahren ein Trockenspinnverfahren ist.

11. Verwendung der Polyurethanharnstofffasern nach einem der Ansprüche 3 bis 4 zur Herstellung von elastischen Geweben, Gestricken, Gewirken u.a. textilen Waren.

## Claims

1. A polyurethane-urea composition having improved mechanical properties, **characterised in that** it consists of
A) from 99.98 to 65 % by weight of a polyurethane-urea polymer,
B) from 0.02 to 15 % by weight of a dialkylsulphosuccinate corresponding to general formula(1) 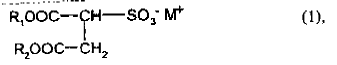 wherein
R1 and R2 are identical and represent 2-ethylhexyl radicals:
-CH2-CH(CH2-CH3)-CH2-CH2-CH2-CH3, and
M+ is Li+, Na+, K+ or NH4+, preferably Na+, and
C) from 0 to 20 % by weight of additives.

2. A polyurethane-urea composition according to claim 1, **characterised in that** a dialkylsulphosuccinate of formula (2): 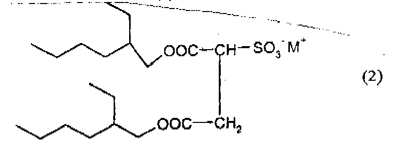 is used as dialkylsulphosuccinate B), wherein M+ represents Na+.

3. Polyurethane-urea fibres which exhibit increased fineness-related strength, comprising polyurethane-urea polymers which contain at least from 0.02 to 15 % by weight of a dialkylsulphosuccinate corresponding to general formula (1) 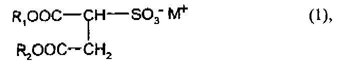 wherein
R1 and R2 are identical or different and represent 2-ethylhexyl radicals:
-CH2-CH(CH2-CH3)-CH2-CH2-CH2-CH3, and
M+ is Li+, Na+, K+ or NH4+, preferably Na+,
wherein the dialkylsulphosuccinate is finely dispersed or dissolved in the fibre.

4. Polyurethane-urea fibres according to claim 3, **characterised in that** a dialkylsulphosuccinate of formula (2): 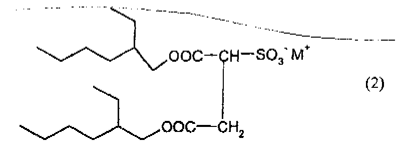 is used, wherein M+ represents Na+.

5. Use of dialkylsulphosuccinates corresponding to general formula (1) 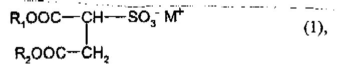 wherein
R1 and R2, independently of each other, are identical or different and represent an alkyl group comprising 1 to 30 carbon atoms
and
M+ is Li+, Na+, K+ or NH4+,
for increasing the (fineness-related) strength of polyurethane-urea fibres comprising polyurethane-urea polymers, wherein the dialkylsulphosuccinate is finely dispersed or dissolved in the fibre in an amount from 0.02 to 15 % by weight.

6. A use according to claim 5, **characterised in that** a dialkylsulphosuccinate of formula (2): 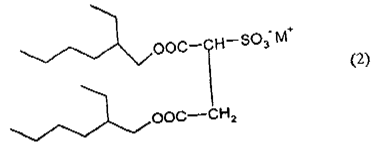 is used as dialkylsulphosuccinate B), wherein M+ represents Li+, Na+, K+ or NH4+.

7. A use according to claim 6, wherein the dialkylsulphosuccinate is the sodium salt of sulphosuccinic acid bis-(2-ethylhexyl) ester corresponding to formula (2).

8. A method of producing improved polyurethane-urea fibres by the dry spinning or wet spinning process, preferably by the dry spinning process, by preparing the spinning solution, spinning the spinning solution using a spinneret, forming fibres downstream of the spinneret by removing the spinning solvent by drying or in a regeneration bath, and conditioning and taking up the fibres,
**characterised in that** from 0.02 to 15 % by weight of a dialkylsulphosuccinate corresponding to general formula (1) 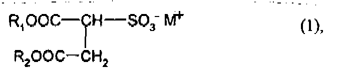 is admixed with and dissolved
wherein
R1 and R2 are identical or different and represent 2-ethylhexyl radicals:
-CH2-CH(CH2-CH3)-CH2-CH2-CH2-CH3, and
M+ is Li+, Na+, K+ or NH4+.

9. A method of producing polyurethane-urea fibres according to claim 8, **characterised in that** a dialkylsulphosuccinate of formula (2): 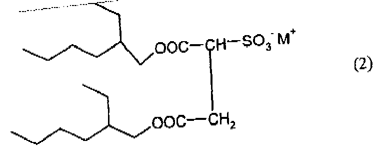 is used, wherein M+ represents Na+.

10. A method according to claim 8 or 9, wherein the method is a dry spinning process.

11. Use of the polyurethane-urea fibres according to any one of claims 3 or 4 for the production of elastic woven fabrics, knitted fabrics, looped fabrics and other textile goods.

## Revendications

1. Une composition polyuréthane-urée à propriétés mécaniques améliorées, **caractérisée par le fait qu'**elle consiste en:
A) 99,98 à 65 % du poids d'un polymère de polyuréthane-urée,
B) 0,02 à 15 % du poids de dialkylsulfosuccinate selon la formule générale (1) 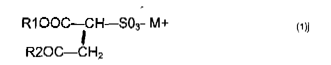 en sachant que
R1 et R2 sont identiques et représentent les radicaux Di (2-)ethylhexyl:
-CH₂-CHCCH2-CH3)-CH2-CH2-CH2-CH₃,
et que M⁺ est Li⁺, Na⁺, K⁺ ou NH4⁺, de préférence Na+,
et
C) 0 jusqu'à 20 % du poids en adjuvants.

2. La composition polyuréthane-urée selon la spécification 1, **caractérisée par le fait que** le dialkylsulfosuccinate de la formule (2) 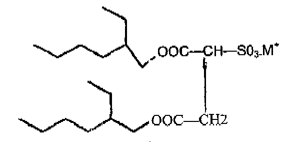 est utilisé en tant que dialkylsulfosuccinate B), dans laquelle M⁺ représente Na⁺

3. Les fibres de polyurétltane-urée ayant une plus grande résistance grâce à leur finesse et comprenant des polymères de polyuréthane-urée, contenant au moins 0,02 à 15 % du poids d'un dialkylsulfosuccinate correspondant à la formule générale (1) 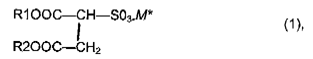 en sachant que
R1 et R₂ sont identiques et représentent les radicaux (Di)2-Ethylhexyl:
-CH₂-CH(CH2-CH3)-CH₂-CH2-CH₂-CH3, et que
M+ est Li⁺, Na⁺, K⁺ ou NH4⁺, de préférence Na+,
où le dialkylsulfosuccinate est finement dispersé ou dissout dans la fibre.

4. Les fibres de polyuréthane-urée conformément à la spécification 3 sont
**caractérisées par le fait que**
un dialkylsulfosuccinate de la formule (2) est utilisé en tant que dialkylsulfosuccinate B),

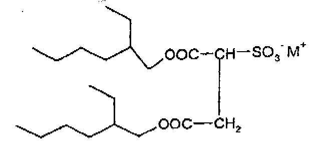

5. Utilisation des dialkylsulfosuccinates conformément à la formule générale (1) 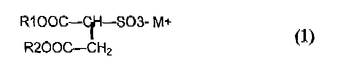 dans laquelle
R₁ et R₂, indépendamment l'un de l'autre, sont identiques ou différents et représentent un groupe alkyl comprenant 1 à 30 atomes de carbone et
M+ est Li⁺, Na⁺, K⁺ ou NH4⁺,
afin d'augmenter la résistance (due à la finesse) des fibres de polyuréthane-urée comprenant des polymères de polyuréthane-urée, où le dialkylsulfosuccinate est finement dispersé ou dissout dans la fibre dans une proportion de 0,02 à 15 % du poids.

6. Utilisation conformément à la spécification 5, **caractérisée par le fait qu'**un dialkylsulfosuccinate de la formule (2) est utilisé en tant que dialkylsulfosuccinate B), 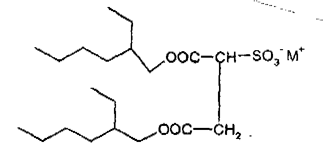 dans lequel M⁺ représente Li⁺, Na⁺, K⁺ ou NH4+.

7. Utilisation conformément à la spécification 6, selon laquelle le dialkylsulfosuccinate est le sel de sodium de l'ester d'acide sulfosuccinique-bis-(2-ethylhexyl) correspondant à la formule (2).

8. Une méthode pour la production de fibres polyuréthane-urée améliorées en utilisant les procédés soit de filage à sec, soit de filage au mouillé, en préparant la solution à filer, filant la solution à filer à l'aide d'une filière, formant des fils au bas de la filière en enlevant la solution à filer par séchage ou dans un bain de régénération, ainsi qu'en conditionnant et enroulant les fils, **caractérisés par le fait que** de 0,02 à 15 % du poids d'un dialkylsulfosuccinate correspondant à la formule générale (1) est mélangé à, et dissout dans la solution de polyuréthane-urée, avant le filage de ladite solution afin de former des fibres de polyuréthane-urée 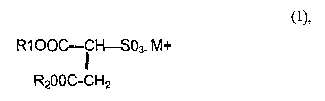 dans lesquels
R₁ et R₂ sont identiques et représentent les radicaux (Di)2-Ethylhexyl:
-CH₂-CH(CH₂-CH3)-CH₂-CH2-CH2-CH3, et
M⁺ est Li⁺, Na⁺, K⁺ ou NH4.

9. Procédé de production de fibres polyuréthane-urée conformément à la spécification 8, qui est **caractérisée par le fait qu'**un dialkylsulfosuccinate de la formule (2) est utilisé en tant que dialkylsulfosuccinate B), 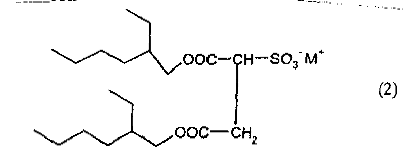 dans lequel M⁺ représente Na⁺.

10. Procédé conformément à une des spécifications 8 à 9, **caractérisé par le fait qu'**il s'agit d'un procédé de filage à sec.

11. Utilisation des fibres de polyuréthane-urée conformément à une des spécifications 3 à 4 en vue de la fabrication de tissus élastiques, de tricots, tissus bouclés (tulles, éponge), ainsi que d'autres textiles.
